# EUROPEAN PATENT SPECIFICATION

(11) **EP 4 024 336 B1**
(45) Date of publication and mention of the grant of the patent: **18.06.2025**
(21) Application number: 21215622.8
(22) Date of filing: 17.12.2021
(51) Int. Cl.: G06T 7/00

(54) **NEURAL NETWORK TRAINING METHOD AND APPARATUS, DEFECT INSPECTION METHOD AND APPARATUS, AND NON-TRANSITORY COMPUTER-READABLE MEDIUM**
VERFAHREN UND VORRICHTUNG ZUM TRAINIEREN EINES NEURONALEN NETZWERKS, VERFAHREN UND VORRICHTUNG ZUR DEFEKTINSPEKTION UND NICHTFLÜCHTIGES COMPUTERLESBARES MEDIUM
PROCÉDÉ ET APPAREIL DE FORMATION DE RÉSEAU NEURONAL, PROCÉDÉ ET APPAREIL D'INSPECTION DE DÉFAUTS, ET SUPPORT LISIBLE PAR ORDINATEUR NON TRANSITOIRE

(30) Priority: 23.12.2020 CN 202011535094
(43) Date of publication of application: 06.07.2022
(73) Proprietor: Ricoh Company, Ltd., Tokyo 143-8555 (JP)
(72) Inventor: ZHAO, Ying, Beijing, 100044 (CN); ZHANG, Yifei, Beijing, 100044 (CN); WANG, Gang, Beijing, 100044 (CN)
(74) Representative: Marks & Clerk LLP

(56) References cited:
- LI DELONG ET AL: "Image Blind Denoising Using a Generative Adversarial Network for LED Chip Visual Localization", IEEE SENSORS JOURNAL, IEEE, USA, vol. 20, no. 12, 27 February 2020 (2020-02-27), pages 6582 - 6595, XP011789059, ISSN: 1530-437X, [retrieved on 20200515], DOI: 10.1109/JSEN.2020.2976576
- LU YI-WEI ET AL: "Conditional Generative Adversarial Network for Defect Classification with Class Imbalance", 2019 IEEE INTERNATIONAL CONFERENCE ON SMART MANUFACTURING, INDUSTRIAL & LOGISTICS ENGINEERING (SMILE), IEEE, 20 April 2019 (2019-04-20), pages 146 - 149, XP033692916, DOI: 10.1109/SMILE45626.2019.8965320
- ZHANG GONGJIE ET AL: "Defect-GAN: High-Fidelity Defect Synthesis for Automated Defect Inspection", 2021 IEEE WINTER CONFERENCE ON APPLICATIONS OF COMPUTER VISION (WACV), IEEE, 3 January 2021 (2021-01-03), pages 2523 - 2533, XP033927156, DOI: 10.1109/WACV48630.2021.00257

## Description

### BACKGROUND OF THE DISCLOSURE

### 1. Field of the Disclosure

The present disclosure relates to the field of image processing, and particularly, at least a neural network training method and apparatus, a method and apparatus for performing defect inspection by utilizing a neural network (also called a defect inspection method and apparatus for short), and a non-transitory computer-readable medium.

### 2. Description of the Related Art

Defect inspection (also called defect detection) is an important factor in product quality control. Because of the randomness of the defect patterns and colors on product surfaces, robust and automatic inspection of different defects is a key issue to be solved in this field.

In current defect inspection methods, a large amount of labeled data is usually used to train a neural network for defect inspection. In addition, when carrying out defect inspection, it is often necessary to manually set a threshold for post-processing. However, this kinds of methods of training the neural network and the defect inspection methods based on the neural network cannot achieve accurate detection of disordered defects and automatic acquisition of an inspection result. Li Delong, et al. "Image Blind Denoising Using a Generative Adversarial Network for LED Chip Visual Localization", in IEEE Sensors Journal, vol. 20, no. 12, pp. 6582-6595, 2020, discloses a convolutional neural network combined with a generative adversarial networks framework for image denoising of LED chip images.

### SUMMARY OF THE DISCLOSURE

In order to solve the above-described technical problem, the present disclosure provides at least a neural network training method and apparatus, a method and apparatus for performing defect inspection by utilizing a neural network, and a non-transitory computer-readable medium.

According to a first aspect of the present disclosure, a neural network training method is provided that includes steps of inputting an input training image(s) into a neural network, wherein, the input training image(s) is generated by introducing a defect(s) into an original training image(s), and the defect(s) is associated with an image feature(s) of the original training image(s); by utilizing the neural network, decomposing the input training image(s), introducing noise into the decomposition result(s), and synthesizing the decomposition result(s) and the noise to obtain a synthesis training image(s) (i.e., a synthesized training image(s)); and performing defect inspection on the synthesis training image(s) by using the neural network, and adjusting, based on at least the original training image(s) and the defect inspection result, a parameter(s) of the neural network.

According to a second aspect of the present disclosure, a method of performing defect inspection by utilizing a neural network is provided that is inclusive of steps of inputting an input image(s) into the neural network, wherein, the neural network is obtained by means of the neural network training method; and, by utilizing the neural network, conducting defect inspection regarding the input image(s), extracting an outline of a defect(s), and acquiring a defect inspection result(s).

According to a third aspect of the present disclosure, a neural network training apparatus is provided that contains an input part configured to input an input training image(s) into a neural network, wherein, the input training image(s) is generated by introducing a defect(s) into an original training image(s), and the defect(s) is associated with an image feature(s) of the original training image(s); a synthesis part configured to, by utilizing the neural network, decompose the input training image(s), introduce noise into the decomposition result(s), and synthesize the decomposition result(s) and the noise to obtain a synthesis training image(s); and an inspection part configured to perform defect inspection on the synthesis training image(s) by using the neural network, and adjust, based on at least the original training image(s) and the defect inspection result, a parameter(s) of the neural network.

According to a fourth aspect of the present disclosure, a neural network training apparatus is provided that involves a processor and a storage connected to the processor. The storage stores computer-executable instructions that, when executed by the processor, cause the processor to implement the neural network training method.

According to a fifth aspect of the present disclosure, a computer-executable program and a non-transitory computer-readable medium are provided. The computer-executable program causes a computer to conduct the neural network training method. The non-transitory computer-readable medium stores computer-executable instructions (i.e., the computer-executable program) for execution by the computer. The computer-executable instructions, when executed by the computer, render the computer to perform the neural network training method.

According to a sixth aspect of the present disclosure, an apparatus for performing defect inspection by utilizing a neural network is provided that includes an input part configured to input an input image(s) into the neural network, wherein, the neural network is obtained by way of the neural network training method; and an inspection part configured to, by utilizing the neural network, conduct defect inspection pertaining to the input image, extract an outline of a defect(s), and acquire an defect inspection result.

According to a seventh aspect of the present disclosure, a defect inspection apparatus is provided that contains a processor and a storage connected to the processor. The storage stores computer-executable instructions that, when executed by the processor, cause the processor to carry out the method of performing defect inspection by utilizing a neural network.

According to an eighth aspect of the present discloser, a computer-executable program and a non-transitory computer-readable medium are provided. The computer-executable program causes a computer to conduct the method of performing defect inspection by utilizing a neural network. The non-transitory computer-readable medium stores computer-executable instructions (i.e., the computer-executable program) for execution by the computer. The computer-executable instructions, when executed by the computer, render the computer to implement the method of performing defect inspection by utilizing a neural network.

On the basis of at least the neural network training method and apparatus as well as the defect inspection method and apparatus, it is possible to introduce a defect(s) associated with an image feature(s) of an original training image(s) into the original training image(s) so as to generate an input training image(s), and train a neural network for defect inspection by using the input training image(s). In addition, noise can be further introduced to enrich a defect inspection sample(s) for training the neural network, thereby being capable of improving the defect inspection accuracy and the automation of the neural network, and making user experience better.

### BRIEF DESCRIPTION OF THE DRAWINGS

FIG. 1 is a flowchart of a neural network training method according to an embodiment;
FIG. 2 is a flowchart of a method of performing defect inspection by using a neural network in accordance with an embodiment;
FIG. 3 shows a structure of a neural network to be trained in an example;
FIG. 4 presents an image decomposition process in the example;
FIG. 5 illustrates a first discriminant network or a second discrimination network adopted in the example;
FIG. 6 shows a defect inspection process conducted regarding a synthesis training image in the example;
FIG. 7 is a block diagram of a neural network training apparatus according to an embodiment;
FIG. 8 is a block diagram of another neural network training apparatus in accordance with an embodiment;
FIG. 9 is a block diagram of a defect inspection apparatus according to an embodiment; and
FIG. 10 is a block diagram of another defect inspection apparatus in accordance with an embodiment.

### DETAILED DESCRIPTION OF THE PREFERRED EMBODIMENTS

In order to let a person skilled in the art better understand the present disclosure, hereinafter, the embodiments of the present disclosure are concretely described with reference to the drawings. However, it should be noted that the same symbols, that are in the specification and the drawings, stand for constructional elements having basically the same function and structure, and the repetition of the explanations to the constructional elements is omitted.

When training a neural network for defect inspection, it is often necessary to introduce a large number of input images containing various defects to serve as samples (also called training samples) so as to adjust the parameter(s) of the neural network. However, in an actual training process, the collection of the samples and the training effect of the neural network are difficult to guarantee.

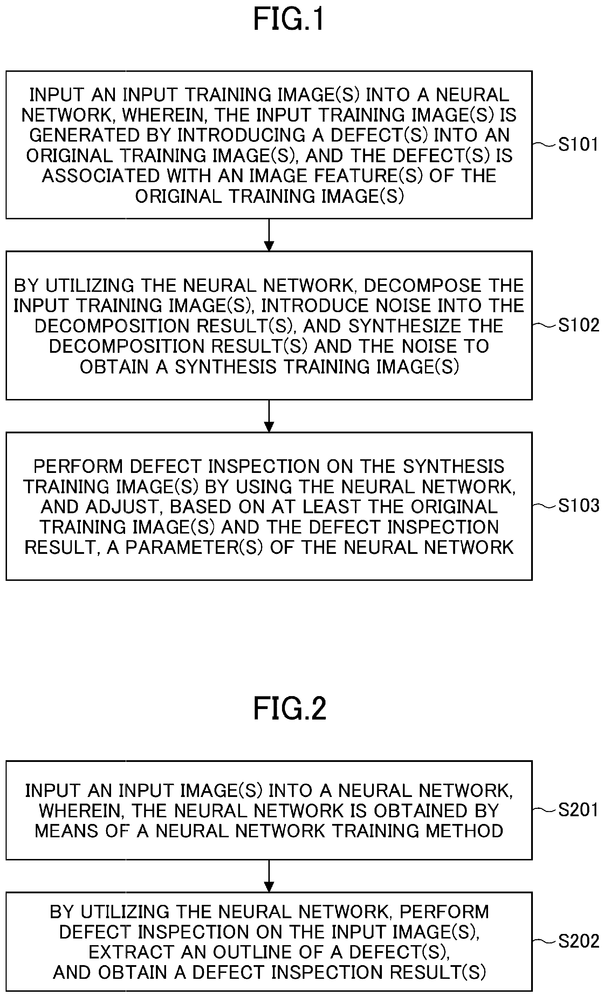

FIG. 1 is a flowchart of a neural network training method according to an embodiment. As shown in this drawing, the neural network training method includes STEPS S101 to S103.

S101 is inputting an input training image(s) into a neural network. The input training image(s) is generated by introducing a defect(s) into an original training image(s), and the defect(s) is associated with an image feature(s) of the original training image(s).

In this step, the original training image(s) for training the neural network may be the image(s) of a product without any defect. In order to enrich training samples as much as possible, the original training image(s) may be various images of the same product, captured under different angles, different lighting conditions, and different backgrounds. In this way, it is possible to further improve the defect inspection accuracy of the neural network after training.

After the original training image(s) is obtained, a defect(s) can be introduced into the original training image(s) to acquire an input training image(s) to be input into the neural network. The defect(s) introduced is associated with an image feature(s) of the original training image(s). Optionally, the image feature(s) of the original training image(s) may contain at least one or more of the shape, the texture, and the color of the original training image(s). By introducing the defect(s) associated with the image feature(s) of the original training image(s) into the original training image(s), it is possible to make the generated input training image(s) closer to the image(s) of an actual product with a defect(s).

In an example, the defect(s) introduced may be associated with the color of the original training image(s). For instance, if the product presented in the original training image(s) is a doll having colors such as black, skin color, red, and the like, then the defect(s) introduced into the original training image(s) may be inclusive of the defects of these colors, so that it is possible to better simulate an actual sample(s) with a defect(s). In another example, the defect(s) introduced may be associated with the texture of the original training image(s). As an illustration, it is provided that there are a plurality of dots in the original training image(s), the defect(s) introduced into the original training image(s) may be a similar dot(s). This is also for conducting more realistic simulation regarding an actual sample(s) containing a defect(s).

In STEP S102, the neural network is utilized to decompose the input training image(s), introduce noise into the decomposition result(s), and synthesize the decomposition result(s) and the noise to acquire a synthesis training image(s).

It is possible to adopt, in this step, the neural network to decompose the input training image(s) into a plurality of components (e.g., including a restoration image component without any defect, restored by the neural network and a defect image component indicating the defect(s) in the input training image(s)) and a correction factor (e.g., used to indicate the mapping of the ratios respectively occupied by the restoration image component and the defect image component to the input training image(s)).

As an example, an input training image I may be expressed by an equation, i.e., I=αN+(1-α)D. Here, N is a restoration image component without any defect, restored by the neural network; D denotes a defect image component indicating the defect(s) in the input training image I; and α refers to a correction factor used to indicate the mapping of the ratios respectively occupied by the restoration image component N and the defect image component D to the input training image I.

For instance, each of the restoration image component N and the defect image component D may be a matrix whose arrangement is the same as the input training image I (that may also be regarded as a matrix composed of pixels), and the correction factor α may be utilized to indicate a weight (ratio) of each element in each of the components N and D occupied in the corresponding matrix (e.g., the input training image I). The value of the correction factor α may be greater than or equal to 0 (zero) and less than or equal to 1 (one).

As an illustration, if the value of α for an element in the restoration image component N or the defect image component D is 1, the value of the corresponding element in the input training image I is the value of the corresponding element in the restoration image component N, and if the value of α for an element in the restoration image component N or the defect image component D is 0, the value of the corresponding element in the input training image I is the value of the corresponding element in the defect image component D.

Here it should be noted that the value of each element of the defect image component D can be understood as a real pixel value. Alternatively, the defect image component D can be understood as the difference between the input training image I and the restoration image component N at the corresponding defect positions thereof; in other words, the value of each element of the defect image component D can be regarded as the difference between the values (i.e., the pixel values) of the corresponding elements in the input training image I and the restoration image component N. Of course, in the latter case, the said equation may be adjusted accordingly on the basis of the same principal. Moreover, in actuality, it is also possible to take advantage of any other approach to express the input training image I; that is, the present disclosure is not limited to the above example.

Optionally, the structure of the neural network for decomposing the input training image(s) can contain a generative network that may include a coder, decoder, and a generator, for example. The coder can employ multiple sets of convolution, normalization, and pooling having different parameters to extract feature maps of different scales (also called multi-scale feature maps) from the input training image(s). Specifically, it is possible to first use a convolutional kernel(s) to convolve the input training image(s) so as to obtain a convolutional map(s), then adopt a rectified linear unit (ReLU) and a batch normalization approach to normalize the convolutional map(s) so as to gain a normalized convolutional map(s), and then, carry out max pooling or average pooling with respect to the normalized convolutional map(s). Such a process can be repeated multiple times, and the multi-scale feature maps can be extracted by means of multi-down-sampling.

The decoder in the generative network can utilize multiple sets of convolution, normalization, and up-sampling to restore the resolution of the multi-scale feature maps produced in the coder. Furthermore, the generator in the generative network can output, based on the characteristics of the multi-scale feature maps having the same resolution acquired in the coder and the decoder, a decomposition result by making use of multiple convolutions.

Here it should be pointed out that the original training image(s) without any defect may be used to supervise the generation of the restoration image component(s). Moreover, it is also possible to supervise the generation of the defect image component(s) and the correction factor(s) by way of the defect(s) introduced into the original training image(s)s. Additionally, the foregoing process of decomposing the input training image(s) is only an example. In practical applications, any other approach can be used to decompose the input training image(s); that is, the present disclosure is not limited to the above-described decomposition process.

After the input training image(s) is decomposed, a first discriminant network in the neural network can be utilized to compare the original training image(s) and the restoration image component(s), and the parameter(s) of the generative network in the neural network can be adjusted based on the comparison result.

For example, the first discriminant network can extract a feature(s) from the restoration image component(s), perform comparison and discrimination on the restoration image component(s) and the original training image(s) according to the extracted feature(s), and output a discrimination result(s).

Specifically, the first discriminant network can use multiple sets of convolution, normalization, and pooling having different parameters to respectively extract multi-scale feature maps from the restoration image component(s), and determine whether the restoration image component(s) is true. If the determination result is true, it means that the restoration image component(s) is highly similar to the original training image(s), i.e., the restoration image component(s) is good enough to use.

Furthermore, by the feedback of the first discriminant network, it is possible to adjust the parameter(s) of the neural network, thereby being capable of generating a high-quality restoration image component(s) as well as a corresponding image component(s) and a corresponding correction factor(s) with high quality in the training stage.

After acquiring the decomposition result(s), noise is introduced into the decomposition result(s). For instance, noise can be randomly introduced into the decomposition result(s), and the decomposition result(s) and the noise is synthesized as a synthesis training image(s). Here it is possible to respectively attain a noise defect image component(s) and a noise correction factor(s) on the basis of the defect image component(s), the correction factor(s), and the noise introduced, and synthesize the restoration image component(s), the noise defect image component(s), and the noise correction factor(s) to procure a synthesis training image(s).

When noise is randomly introduced into the decomposition result(s), it may negatively influence the defect image component(s) and the correction factor(s) acquired by decomposition. For this reason, it is necessary to update the defect image component(s) as a noise defect image component(s) on the basis of the position(s) and the size(s) of the randomly introduced noise, and update the correction factor(s) at the corresponding position(s) as a noise correction factor(s). After update, it is possible synthesize the restoration image component(s), the noise defect image component(s), and the noise correction factor(s) as a synthesis training image(s).

In the process of procuring the synthesis training image(s), considering that the randomly introduced noise may negatively affect the determination pertaining to the noise in the synthesis training image(s), it is also possible to further adjust the synthesis training image(s) according to at least one of a defect edge smoothing degree calculated based on at least the noise defect image component(s) and the noise correction factor(s) and a color similarity calculated based on at least the restoration image component(s) and the noise defect image component(s).

Specifically, first it is possible to utilize various boundary or gradient extraction approaches to calculate a defect edge smoothing degree(s) on the basis of at least the noise defect image component(s) and the noise correction factor(s), and further adjust the noise defect image component(s) and the noise correction factor(s) on the basis of the defect edge smoothing degree(s), so as to make the edge(s) of the defect(s) as smooth as possible, or make the defect edge smoothing degree(s) greater than a predetermined threshold.

Next, after the defect edge smoothing degree(s) is adjusted, it is possible to adopt various similarity calculation algorithms to calculate a color similarity(s) of the restoration image component(s) and the adjusted noise defect image component(s), so as to retain only the noise defect(s) whose color(s) is not similar to the color(s) of the restoration image component(s) (or whose similarity to the color(s) of the restoration image component(s) is less than a predetermined threshold), then further correct the noise defect image component(s) and the noise correction factor(s) accordingly, and then, further update the synthesis training image(s).

Referring again to FIG. 1; in STEP S103, the neural network is utilized to conduct defect inspection on the synthesis training image(s), and the parameter(s) of the neural network is adjusted on the basis of at least the original training image(s) and the defect inspection result(s).

The restoration training image(s) can be attained based on the synthesis training image(s) in this step. Specifically, by using a multi-task network in the neural network and on the basis of the synthesis training image(s), it is possible to attain a restoration training image(s) without any defect and extract the outline of a defect(s), respectively. The generation process of the restoration training image(s) may be analogous to the operation process of the generative network for decomposing the input training image(s), and the extraction process of the outline of the defect(s) may be supervised by the noise defect image component(s) and the noise correction factor(s) for producing the synthesis training image(s).

After attaining the restoration training image(s), the parameter(s) of the neural network can be adjusted on the basis of at least the original training image(s) and the restoration training image(s). Specifically, it is possible to compare the original training image(s) and the restoration training image(s) by using a second discriminant network in the neural network, and adjust the parameter(s) of the neural network in accordance with the comparison result(s).

For example, the second discriminant network can extract a feature(s) from the restoration training image(s), conduct comparison and discrimination regarding the restoration training image(s) and the original training image(s) on the basis of the extracted feature(s), and output a discrimination result(s).

Specifically, the second discriminant network can use multiple sets of convolution, normalization, and pooling having different parameters to respectively extract multi-scale feature maps from the restoration training image(s), and determine whether the restoration training image(s) is true. If the determination result is true, it means that the restoration training image(s) is highly similar to the original training image(s), i.e., the restoration training image(s) is good enough to use.

Moreover, by the feedback of the second discriminant network, it is possible to adjust the parameter(s) of the neural network, thereby being able to generate a restoration training image(s) with high quality and accurately extract the outline of a defect(s) in the training stage.

On the basis of the neural network training method according to this embodiment, it is possible to introduce a defect(s) associated with an image feature(s) of an original training image(s) into the original training image(s) so as to generate an input training image(s), and train a neural network for defect inspection by using the input training image(s). Moreover, noise can be further introduced to enrich a defect inspection sample(s) for training the neural network, thereby being able to improve the defect inspection accuracy and the automation of the neural network, and make user experience better. Such a neural network training method can be applied to computer vision tasks for defect inspection of various products, surface defect inspection of objects like road surfaces and chip surfaces, etc.

Additionally, according to another embodiment, it is not limited to use the specific operation process of the neural network training method to train a neural network. That is, it is also possible to meet other requirements in various application scenarios by means of the architecture of the neural network. For instance, the architecture of the neural network can be utilized to produce diversified samples such as human faces, animated images, and so on, or applied to other application scenarios in which an image defect(s) or noise needs to be introduced.

Specifically, in this kind of situation, it is possible to use an input sample image(s) instead of an input training image(s), and adopt an original sample image(s) instead of an original training image(s), and the subsequent neural network parameter adjustment process is unnecessary. For example, the following steps may be involved in a method (also called a sample image generation method) according to this embodiment, namely, inputting an input sample image(s) into a neural network, wherein, the input sample image(s) is generated by introducing a defect(s) into an original sample image(s), and the defect(s) are associated with an image feature(s) of the original sample image(s); and utilizing the neural network to decompose the input sample image(s), introduce noise into the decomposition result(s), and synthesize the noise and the decomposition result(s) to obtain a synthesis sample image(s). The respective synthesis sample images obtained by using such a method can serve as diversified samples to be applied to the corresponding application scenario.

On the basis of the method in accordance with this embodiment, it is possible to create, based on an image feature(s) of an original sample image(s), an input sample image(s) having the corresponding defect(s), and introduce noise such as random noise to process the input sample image(s) so as to gain diversified samples available to the corresponding application scenario.

FIG. 2 is a flowchart of a defect inspection method according to an embodiment. As presented in this drawing, the defect inspection method contains STEPS S201 and S202.

In STEP S201, an input image(s) is input into a neural network. Here the neural network is obtained by the neural network training method set forth above.

Specifically, when inputting an input image(s) to be detected into the neural network, the input image(s) can be input directly from a port used for inputting an input training image(s) to train the neural network or from a port in the neural network used for inputting a synthesis training image(s). Both of these two input ways can obtain a defect inspection result(s) through the neural network. Here it should be noted that in this defect inspection stage, it is unnecessary to employ the first and second discriminant networks to discriminate whether an image restored by the neural network is true and carry out parameter adjustment with respect to the neural network; that is, it is only necessary to utilize the neural network to conduct defect inspection.

STEP S202 is using the neural network to perform defect inspection on the input image(s), extract the outline of a defect(s), and acquire a defect inspection result(s). In the defect inspection process, it is possible to utilize the said multi-task network to restore an image without any defect and extract the outline of the defect(s), respectively.

On the basis of the defect inspection method according to this embodiment, it is possible to adopt a neural network trained by the neural network training method to carry out defect inspection, thereby being able to ameliorate the defect inspection accuracy and the automation of the neural network, and improve user experience. Such a defect inspection method can be applied to computer vision tasks for defect inspection of various products, surface defect inspection of objects like road surfaces and chip surfaces, etc.

In what follows, an example of the neural network training method according to the embodiment is provided.

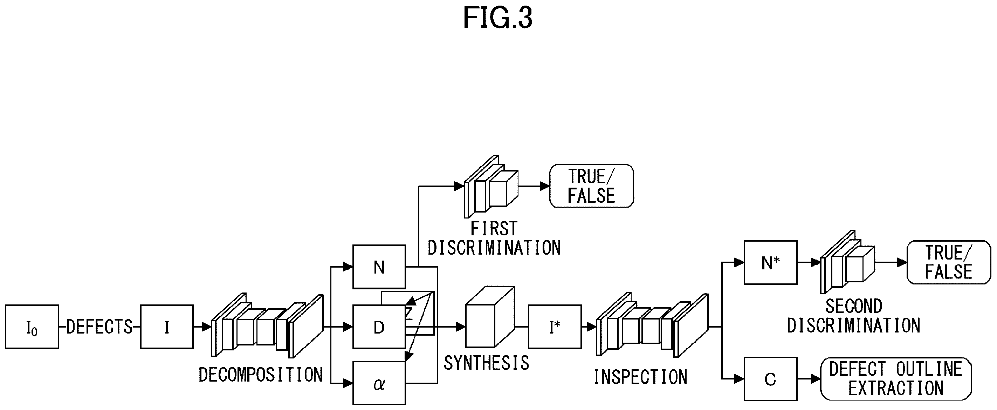

FIG. 3 shows a structure of a neural network to be trained in this example. As illustrated in FIG. 3, defects are introduced into an original training image Iₒ to generate an input training image I. The defects introduced are associated with an image feature(s) of the original training image Iₒ, for example, at least one or more of the shape, the texture, and the color of the original training image(s).

Here it should be pointed out that different input training images I can be input into the neural network to be trained multiple times. The different input training images I may be obtained by introducing different defects into the same original training image Iₒ, or acquired by introducing the same defect or different defects into different original training images Iₒ collected under different angles, different lighting conditions, and different backgrounds.

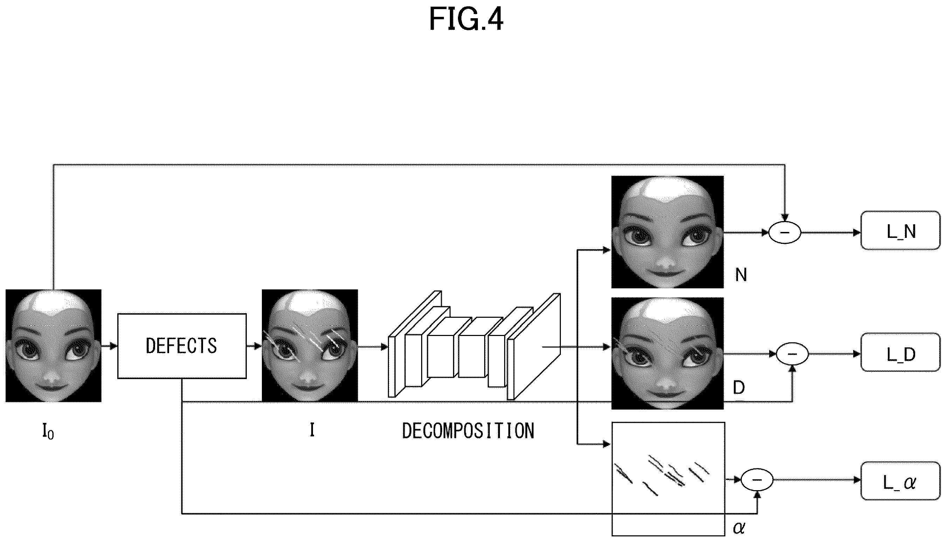

FIG. 4 presents an image decomposition process used in this example. After the defects are introduced into the original training image Iₒ, and the input training image I is input into the neural network, it is possible to utilize a generative network in the neural network to decompose the input training image I, so as to attain a restoration image component N without any defect, restored by the neural network, a defect image component D including the defect(s) in the input training image I, and a correction factor α used for indicating the mapping of the ratios of the restoration image component N and the defect image component D occupied in the input training image I, respectively.

The relationship among these two components N and D, the correction factor α, and the input training image I can be expressed by the above equation, i.e., I=αN+(1-α)D. Here the original training image Iₒ without any defect can be employed to supervise the generation of the restoration image component N. Additionally, it is also possible to supervise, based on the defects introduced into the original training image Iₒ, the generation of the defect image component D and the correction factor α, and attain the loss functions L_N, L_D, and L_α of the restoration image component N, the defect image component D, and the correction factor α, respectively.

After decomposing the input training image I, it is possible to compare the original training image Iₒ and the restoration image component N by using the first discriminant network in the neural network, and adjust the parameter(s) of the generative network on the basis of the comparison result. The parameter(s) of the neural network can be adjusted on the basis of the feedback of the first discriminant network, so that a high-quality restoration image component N as well as the corresponding defect image component D and the corresponding correction factor α with high quality can be generated in the training stage.

### generative network

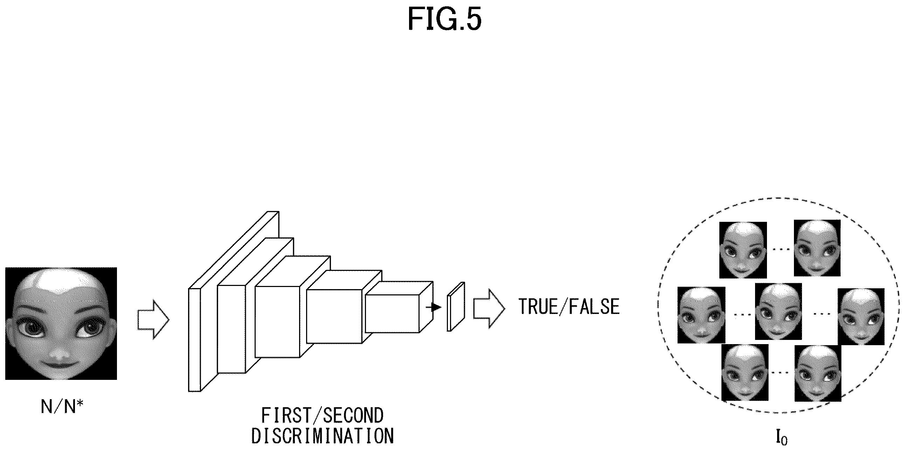

FIG. 5 illustrates a first discriminant network or a second discrimination network used in the follow-on process in this example, that can carry out true-false discrimination based on the input restoration image component N or restoration training image N* and the original training image Iₒ, and output a corresponding loss function L_A or L_N*.

Next, as shown in FIG. 3, after the decomposition result is acquired, random noise Z can be introduced into the decomposition result. It is possible to gain a noise defect image component and a noise correction factor on the basis of the defect image component D, the correction factor α, and the random noise Z introduced, and synthesize the restoration image component N, the noise defect image component, and a noise correction factor to attain a synthesis training image I*.

During the process of attaining the synthesis training image I*, it is also possible to adjust the synthesis training image I* according to at least one of a defect edge smoothing degree calculated based on at least the noise defect image component and the noise correction factor and a color similarity calculated based on at least the restoration image component N and the noise defect image component.

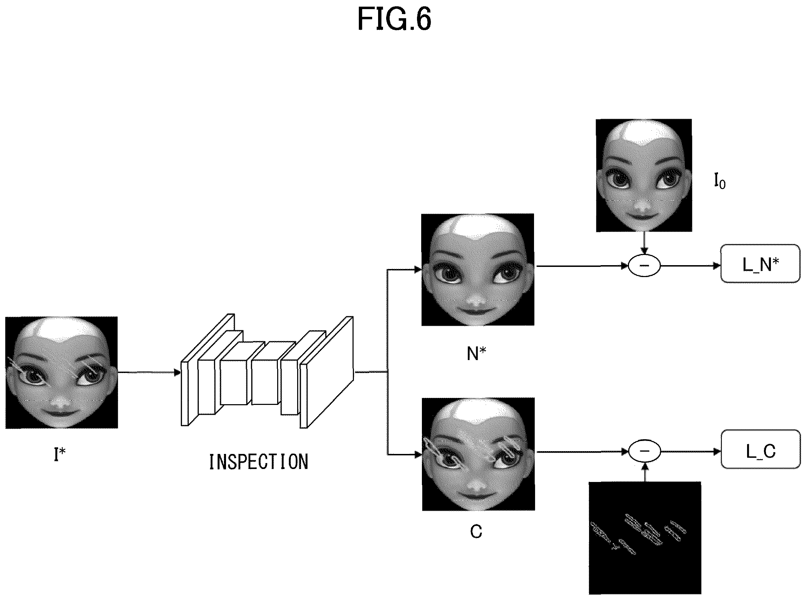

Subsequently, it is possible to utilize the neural network to perform defect inspection on the synthesis training image I*, and adjust the parameter(s) of the neural network on the basis of at least the original training image Iₒ and the defect inspection result. FIG. 6 shows a defect inspection process conducted regarding the synthesis training image I* in this example. As presented in this drawing, it is possible to procure a restoration training image N* without any defect, restored by the neural network, and further extract the outlines C of the defects.

After procuring the restoration training image N*, the parameter(s) of the neural network can be adjusted on the basis of at least the original training image Iₒ and the restoration training image N*. Specifically, a second discriminant network shown in FIG. 5 can be used to compare the original training image Iₒ and the restoration training image N*, acquire a loss function L_N* based on the comparison result, and adjust the parameter(s) of the neural network. In addition, it is also possible to supervise the extracted defect outlines C on the basis of the noise defect image component and noise correction factor for synthesizing the synthesis training image I*, and obtain a loss function L_C.

Finally, after the respective loss functions are obtained, it is possible to calculate a total loss function including L_N, L_D, L_α, L_N*, L_C, and L_A, and update the parameter(s) of the neural network to acquire a trained neural network.

Moreover, when using the trained neural network to carry out defect inspection, it is possible to input an input image(s) into the trained neural network. Specifically, the input image(s) can be input directly from the input port for the input training image I or from the input port for the synthesis training image I*. Both of these two input ways can obtain a defect inspection result(s) through the trained neural network. Additionally, in this defect inspection stage, it is unnecessary to use the first discriminant network and the second discriminant network to conduct true-false discrimination regarding an image restored by the neural network and parameter adjustment pertaining to the neural network. That is, it is only necessary to utilize the trained neural network to carry out defect inspection, extract the outline C of a defect(s), and output a restoration training image N* without any defect, restored by the trained neural network.

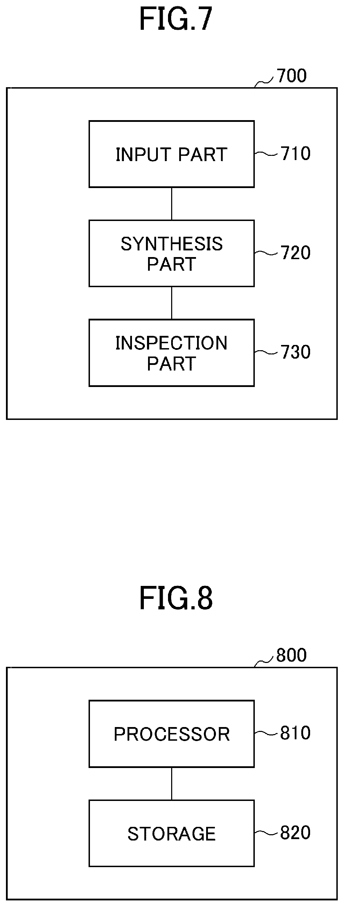

As presented in FIG. 7, a neural network training apparatus 700 is provided according to an embodiment, that is inclusive of at least an input part 710, a synthesis part 720, and an inspection part 730. That is, neural network training apparatus 700 may also contain other parts as needed.

The neural network training apparatus 700 can be configured to perform the neural network training method shown in FIG. 1. Specifically, the input part 710, the synthesis part 720, and the inspection part 703 can be configured to conduct STEPS S101 to S103 of FIG. 1, respectively.

Here it should be pointed out that for the reason that STEPS S101 to S103 of FIG. 1 have been minutely described above, the details of them are omitted in this embodiment.

Additionally, the neural network training apparatus 700 can also be configured to perform the sample image generation method set forth above. In this case, the input part 710 and the synthesis part 702 can be configured to carry out the steps of the sample image generation method, respectively. Here, for the sake of convenience, the details of the steps of the sample image generation method are omitted.

On the basis of the neural network training apparatus according to this embodiment, it is possible to introduce a defect(s) associated with an image feature(s) of an original training image(s) into the original training image(s) so as to generate an input training image(s), and train a neural network for defect inspection by using the input training image(s). Moreover, noise can be further introduced to enrich a defect inspection sample(s) for training the neural network, thereby being able to improve the defect inspection accuracy and the automation of the neural network, and make user experience better. Such a neural network training apparatus can be applied to computer vision tasks for defect inspection of various products, surface defect inspection of objects like road surfaces and chip surfaces, etc.

Furthermore, as shown in FIG. 8, another neural network training apparatus 800 is provided according to an embodiment, that contains a processor 810 and a storage 820 connected to the processor 810. The storage 820 stores computer-executable instructions that, when executed by the processor 810, cause the processor 810 to implement the neural network training method shown in FIG. 1.

A computer-executable program and a non-transitory computer-readable medium are also provided in this embodiment. The computer-executable program causes a computer to conduct the neural network training method presented in FIG. 1. The non-transitory computer-readable medium stores computer-executable instructions (i.e., the computer-executable program) for execution by the computer. The computer-executable instructions, when executed by the computer, render the computer to perform the neural network training method shown in FIG. 1.

Here it should be noted that because the steps involved in neural network training method presented in FIG. 1 have been minutely set forth above, the details of these steps are omitted in this embodiment for the sake of convenience.

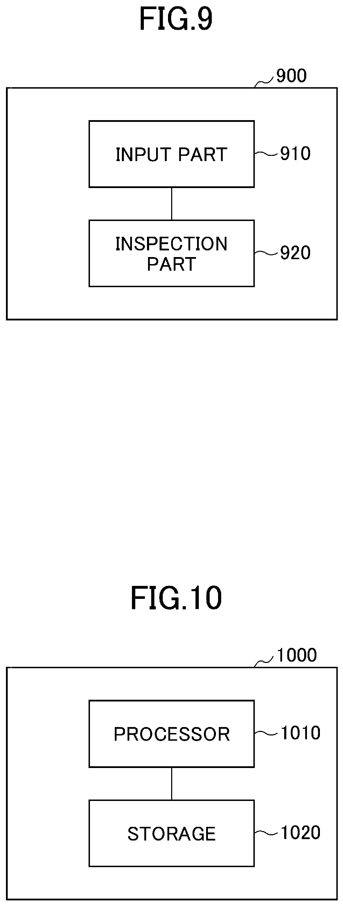

As illustrated in FIG. 9, a defect inspection apparatus 900 is provider in accordance with an embodiment, that contains an input part 910 and a defect inspection part 920. Of course, the defect inspection apparatus 900 may further include other parts as needed.

The defect inspection apparatus 900 can be configured to perform the defect inspection method presented in FIG. 2. Specifically, the input part 910 and the defect inspection part 920 can be configured to conduct STEPS S201 and S202 in FIG. 2, respectively.

Here it should be mentioned that for the reason that STEPS S201 and S202 of FIG. 2 have been concretely described above, their details are omitted in this embodiment.

On the basis of the defect inspection apparatus according to this embodiment, it is possible to adopt a neural network trained by the above-described neural network training method to carry out defect inspection, thereby being able to ameliorate the defect inspection accuracy and the automation of the neural network, and make user experience better. Such a defect inspection apparatus can be applied to computer vision tasks for defect inspection of various products, surface defect inspection of objects like road surfaces and chip surfaces, etc.

In addition, as shown in FIG. 10, another defect inspection apparatus 1000 is provided according to an embodiment, that contains a processor 1010 and a storage 1020 connected to the processor 1010. The storage 1020 stores computer-executable instructions that, when executed by the processor, cause the processor 1010 to carry out the defect inspection method presented in FIG. 2.

A computer-executable program and a non-transitory computer-readable medium are also provided in this embodiment. The computer-executable program causes a computer to conduct the defect inspection method shown in FIG. 2. The non-transitory computer-readable medium stores computer-executable instructions (i.e., the computer-executable program) for execution by the computer. The computer-executable instructions, when executed by the computer, render the computer to implement the defect inspection method presented in FIG. 2.

Here it should be noted that for the reason that STEPS S201 and S202 of FIG. 2 have been minutely described above, their details are omitted in this embodiment.

In addition, the above embodiments are just exemplary ones, and the specific structure and operation of them may not be used for limiting the present disclosure.

Furthermore, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G, 4G, or 5G-compliant phone), and so on. Since the embodiments of the present disclosure may be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device, or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

## Claims

1. A computer-implemented neural network training method comprising:
a step (S101) of inputting at least one input training image into a neural network, wherein, the at least one input training image is generated by introducing at least one defect into at least one original training image, and the at least one defect is associated with at least one image feature of the at least one original training image;
a step (S102) of, by utilizing the neural network, decomposing the at least one input training image, introducing noise into the at least one decomposition result, and synthesizing the at least one decomposition result and the noise to obtain at least one synthesis training image; and
a step (S103) of performing defect inspection on the at least one synthesis training image by using the neural network, and adjusting, based on at least the at least one original training image and the defect inspection result, at least one parameter of the neural network,
wherein the decomposing the at least one input training image includes utilizing the neural network to decompose the at least one input training image so as to acquire, as the at least one decomposition result, at least one restoration image component, at least one defect image component, and at least one correction factor.

2. The neural network training method in accordance with claim 1, wherein,
the at least one defect is associated with any one of a shape, texture, and color of the at least one original training image.

3. The neural network training method in accordance with claim 1 or 2, wherein,
the at least one parameter of the neural network is further adjusted based on the at least one original training image and the at least one restoration image component.

4. The neural network training method in accordance with any one of claims 1 to 3, wherein,
the introducing noise into the at least one decomposition result, and synthesizing the at least one decomposition result and the noise to obtain at least one synthesis training image includes
based on the at least one defect image component, the at least one correction factor, and the noise, acquiring at least one noise defect image component and at least one noise correction factor, respectively; and
synthesizing the at least one restoration image component, the at least one noise defect image component, and the at least one noise correction factor to obtain the at least one synthesis training image.

5. The neural network training method in accordance with claim 4, wherein,
the synthesizing the at least one restoration image component, the at least one noise defect image component, and the at least one noise correction factor to obtain the at least one synthesis training image includes
adjusting the at least one synthesis training image based on at least one of
a defect edge smoothing degree calculated based on at least the at least one noise defect image component and the at least one noise correction factor; and
a color similarity calculated based on at least the at least one restoration image component and the at least one noise defect image component.

6. The neural network training method in accordance with any one of claims 1 to 5, wherein,
the step (S103) of performing defect inspection on the at least one synthesis training image by using the neural network, and adjusting, based on at least the at least one original training image and the defect inspection result, at least one parameter of the neural network includes
acquiring, based on the at least one synthesis training image, at least one restoration training image, and adjusting, based on the at least one original training image and the at least one restoration training image, the at least one parameter of the neural network.

7. A method of performing defect inspection by utilizing a neural network, comprising:
Inputting (S201) at least one input image into the neural network, wherein, the neural network is obtained by means of the neural network training method in accordance with any one of claims 1 to 6; and
by utilizing (S202) the neural network, performing defect inspection on the at least one input image, extracting an outline of at least one defect, and obtaining at least one defect inspection result.

8. A neural network training apparatus (700) comprising:
an input part (710) configured to input at least one input training image into a neural network, wherein, the at least one input training image is generated by introducing at least one defect into at least one original training image, and the at least one defect is associated with at least one image feature of the at least one original training image;
a synthesis part (720) configured to utilize the neural network to decompose the at least one input training image, introduce noise into the at least one decomposition result, and synthesize the at least one decomposition result and the noise to obtain at least one synthesis training image; and
an inspection part (730) configured to perform defect inspection on the at least one synthesis training image by using the neural network, and adjust, based on at least the at least one original training image and the defect inspection result, at least one parameter of the neural network, wherein the decomposing the at least one input training image includes
utilizing the neural network to decompose the at least one input training image so as to acquire at least one restoration image component, at least one defect image component, and at least one correction factor.

9. The neural network training apparatus (700) in accordance with claim 8, wherein,
the at least one defect is associated with any one of a shape, texture, and color of the at least one original training image.

10. The neural network training apparatus (700) in accordance with claim 9, wherein,
the at least one parameter of the neural network is further adjusted based on the at least one original training image and the at least one restoration image component.

11. A neural network training apparatus (800) comprising:
a storage storing (820) computer-executable instructions; and
a processor (810) connected to the storage,
wherein, the computer-executable instructions, when executed, cause the processor to conduct the neural network training method in accordance with any one of claims 1 to 6.

12. A non-transitory computer-readable medium storing computer-executable instructions for execution by a computer, wherein, the computer-executable instructions, when executed, cause the computer to perform the neural network training method in accordance with any one of claims 1 to 6.

13. A defect inspection apparatus (900) comprising:
an input part (910) configured to input at least one input image into a neural network, wherein, the neural network is obtained by means of the neural network training method in accordance with any one of claims 1 to 6; and
an inspection part (920) configured to, by utilizing the neural network, perform defect inspection on the input at least one image, extract an outline of at least one defect, and obtain at least one defect inspection result.

## Patentansprüche

1. Computerimplementiertes Trainingsverfahren für ein neuronales Netzwerk, das Folgendes umfasst:
einen Schritt (S101) des Eingebens mindestens eines Eingabetrainingsbildes in ein neuronales Netzwerk, wobei das mindestens eine Eingabetrainingsbild durch Einführen mindestens eines Defekts in mindestens ein Originaltrainingsbild erzeugt wird, und der mindestens eine Defekt mindestens einem Bildmerkmal des mindestens einen Originaltrainingsbildes zugeordnet ist;
einen Schritt (S102) des Zerlegens, durch Verwenden des neuronalen Netzwerks, des mindestens einen Eingabetrainingsbildes, Einführens von Rauschen in das mindestens eine Zerlegungsergebnis, und Synthetisierens des mindestens einen Zerlegungsergebnisses und des Rauschens zum Erhalten mindestens eines Synthesetrainingsbildes; und
einen Schritt (S103) des Durchführens einer Defektinspektion durch Verwenden des neuronalen Netzwerks an dem mindestens einen Synthesetrainingsbild, und Justierens, auf der Basis von mindestens dem mindestens einen Originaltrainingsbild und dem Defektinspektionsergebnis, mindestens eines Parameters des neuronalen Netzwerks,
wobei das Zerlegen des mindestens einen Eingabetrainingsbildes das Verwenden des neuronalen Netzwerks zum Zerlegen des mindestens einen Eingabetrainingsbildes einschließt, um als das mindestens eine Zerlegungsergebnis mindestens eine Wiederherstellungsbildkomponente, mindestens eine Defektbildkomponente und mindestens einen Korrekturfaktor zu erfassen.

2. Trainingsverfahren für ein neuronales Netzwerk nach Anspruch 1, wobei
der mindestens eine Defekt einer beliebigen von einer Form, einer Textur und einer Farbe des mindestens einen Originaltrainingsbildes zugeordnet ist.

3. Trainingsverfahren für ein neuronales Netzwerk nach Anspruch 1 oder 2, wobei
der mindestens eine Parameter des neuronalen Netzwerks ferner auf der Basis des mindestens einen Originaltrainingsbildes und der mindestens einen Wiederherstellungsbildkomponente justiert wird.

4. Trainingsverfahren für ein neuronales Netzwerk nach einem der Ansprüche 1 bis 3, wobei
das Einführen von Rauschen in das mindestens eine Zerlegungsergebnis und das Synthetisieren des mindestens einen Zerlegungsergebnisses und des Rauschens zum Erhalten mindestens eines Synthesetrainingsbildes Folgendes einschließt:
Erfassen, auf der Basis der mindestens einen Defektbildkomponente, des mindestens einen Korrekturfaktors und des Rauschens, mindestens einer Rauschdefektbildkomponente bzw. mindestens eines Rauschkorrekturfaktors; und
Synthetisieren der mindestens einen Wiederherstellungsbildkomponente, der mindestens einen Rauschdefektbildkomponente und des mindestens einen Rauschkorrekturfaktors zum Erhalten des mindestens einen Synthesetrainingsbildes.

5. Trainingsverfahren für ein neuronales Netzwerk nach Anspruch 4, wobei
das Synthetisieren der mindestens einen Wiederherstellungsbildkomponente, der mindestens einen Rauschdefektbildkomponente und des mindestens einen Rauschkorrekturfaktors zum Erhalten des mindestens einen Synthesetrainingsbildes Folgendes einschließt:
Justieren des mindestens einen Synthesetrainingsbildes auf der Basis von mindestens einem von
einem Defektkantenglättungsgrad, berechnet auf der Basis von mindestens der mindestens einen Rauschdefektbildkomponente und dem mindestens einen Rauschkorrekturfaktor; und
einer Farbähnlichkeit, berechnet auf der Basis von mindestens der mindestens einen Wiederherstellungsbildkomponente und der mindestens einen Rauschdefektbildkomponente.

6. Trainingsverfahren für ein neuronales Netzwerk nach einem der Ansprüche 1 bis 5, wobei
der Schritt (S103) des Durchführens einer Defektinspektion an dem mindestens einen Synthesetrainingsbild durch Verwenden des neuronalen Netzwerks und Justierens, auf der Basis von mindestens dem mindestens einen Originaltrainingsbild und dem Defektinspektionsergebnis, mindestens eines Parameters des neuronalen Netzwerks Folgendes einschließt:
Erfassen, auf der Basis des mindestens einen Synthesetrainingsbildes, mindestens eines Wiederherstellungstrainingsbildes, und Justieren, auf der Basis des mindestens einen Originaltrainingsbildes und des mindestens einen Wiederherstellungstrainingsbildes, des mindestens einen Parameters des neuronalen Netzwerks.

7. Verfahren zum Durchführen einer Defektinspektion durch Verwenden eines neuronalen Netzwerks, das Folgendes umfasst:
Eingeben (S201) mindestens eines Eingabebildes in das neuronale Netzwerk, wobei das neuronale Netzwerk mittels des Trainingsverfahrens für ein neuronales Netzwerk nach einem der Ansprüche 1 bis 6 erhalten wird; und
Durchführen, durch Verwenden (S202) des neuronalen Netzwerks, einer Defektinspektion an dem mindestens einen Eingabebild, Extrahieren eines Umrisses von mindestens einem Defekt, und Erhalten mindestens eines Defektinspektionsergebnisses.

8. Trainingsvorrichtung (700) für ein neuronales Netzwerk, die Folgendes umfasst:
einen Eingabeteil (710), konfiguriert zum Eingeben mindestens eines Eingabetrainingsbildes in ein neuronales Netzwerk, wobei das mindestens eine Eingabetrainingsbild durch Einführen mindestens eines Defekts in mindestens ein Originaltrainingsbild erzeugt wird, und der mindestens eine Defekt mindestens einem Bildmerkmal des mindestens einen Originaltrainingsbildes zugeordnet ist;
einen Syntheseteil (720), konfiguriert zum Verwenden des neuronalen Netzwerks zum Zerlegen des mindestens einen Eingabetrainingsbildes, Einführen von Rauschen in das mindestens eine Zerlegungsergebnis, und Synthetisieren des mindestens einen Zerlegungsergebnisses und des Rauschens zum Erhalten mindestens eines Synthesetrainingsbildes; und
einen Inspektionsteil (730), konfiguriert zum Durchführen einer Defektinspektion an dem mindestens einen Synthesetrainingsbild durch Verwenden des neuronalen Netzwerks, und Justieren, auf der Basis von mindestens dem mindestens einen Originaltrainingsbild und dem Defektinspektionsergebnis, mindestens eines Parameters des neuronalen Netzwerks, wobei das Zerlegen des mindestens einen Eingabetrainingsbildes Folgendes einschließt:
Verwenden des neuronalen Netzwerks zum Zerlegen des mindestens einen Eingabetrainingsbildes, um mindestens eine Wiederherstellungsbildkomponente, mindestens eine Defektbildkomponente und mindestens einen Korrekturfaktor zu erfassen.

9. Trainingsvorrichtung (700) für ein neuronales Netzwerk nach Anspruch 8, wobei
der mindestens eine Defekt einer beliebigen von einer Form, einer Textur und einer Farbe des mindestens einen Originaltrainingsbildes zugeordnet ist.

10. Trainingsvorrichtung (700) für ein neuronales Netzwerk nach Anspruch 9, wobei
der mindestens eine Parameter des neuronalen Netzwerks ferner auf der Basis des mindestens einen Originaltrainingsbildes und der mindestens einen Wiederherstellungsbildkomponente justiert wird.

11. Trainingsvorrichtung (800) für ein neuronales Netzwerk, die Folgendes umfasst:
einen Speicher (820), der computerausführbare Befehle speichert; und
einen mit dem Speicher verbundenen Prozessor (810),
wobei die computerausführbaren Befehle bei Ausführung den Prozessor zum Vollziehen des Trainingsverfahrens für ein neuronales Netzwerk nach einem der Ansprüche 1 bis 6 veranlassen.

12. Nichtflüchtiges computerlesbares Medium, das computerausführbare Befehle zur Ausführung durch einen Computer speichert, wobei die computerausführbaren Befehle bei Ausführung den Computer zum Durchführen des Trainingsverfahrens für ein neuronales Netzwerk nach einem der Ansprüche 1 bis 6 veranlassen.

13. Defektinspektionsvorrichtung (900), die Folgendes umfasst:
ein Eingabeteil (910), konfiguriert zum Eingeben mindestens eines Eingabebildes in ein neuronales Netzwerk, wobei das neuronale Netzwerk mittels des Trainingsverfahrens für ein neuronales Netzwerk nach einem der Ansprüche 1 bis 6 erhalten wird, und
einen Inspektionsteil (920), konfiguriert zum Durchführen, durch Verwenden des neuronalen Netzwerks, einer Defektinspektion an dem eingegebenen mindestens einen Bild, Extrahieren eines Umrisses mindestens eines Defekts und Erhalten mindestens eines Defektinspektionsergebnisses.

## Revendications

1. Procédé d'apprentissage par réseau neuronal mis en œuvre par ordinateur comprenant :
une étape (S101) d'introduction d'au moins une image d'entraînement d'entrée dans un réseau neuronal, dans lequel l'au moins une image d'entraînement d'entrée est générée par l'introduction d'au moins un défaut dans au moins une image d'entraînement originale, et l'au moins un défaut est associé à au moins une caractéristique d'image de l'au moins une image d'entraînement originale ;
une étape (S102), par l'utilisation du réseau neuronal, de décomposition de l'au moins une image d'entraînement d'entrée, d'introduction de bruit dans l'au moins un résultat de décomposition, et de synthèse de l'au moins un résultat de décomposition et du bruit pour obtenir au moins une image d'entraînement de synthèse ; et
une étape (S103) de réalisation d'une inspection de défaut sur l'au moins une image d'entraînement de synthèse par l'utilisation du réseau neuronal, et d'ajustement, sur la base d'au moins l'au moins une image d'entraînement originale et le résultat d'inspection de défaut, d'au moins un paramètre du réseau neuronal,
dans lequel la décomposition de l'au moins une image d'entraînement d'entrée inclut l'utilisation du réseau neuronal pour décomposer l'au moins une image d'entraînement d'entrée pour acquérir, en tant que l'au moins un résultat de décomposition, au moins une composante d'image de restauration, au moins une composante d'image de défaut et au moins un facteur de correction.

2. Procédé d'apprentissage par réseau neuronal selon la revendication 1, dans lequel,
l'au moins un défaut est associé à l'une quelconque d'une forme, d'une texture et d'une couleur de l'au moins une image d'entraînement originale.

3. Procédé d'apprentissage par réseau neuronal selon la revendication 1 ou 2, dans lequel,
l'au moins un paramètre du réseau neuronal est en outre ajusté sur la base de l'au moins une image d'entraînement originale et de l'au moins une composante d'image de restauration.

4. Procédé d'apprentissage par réseau neuronal selon l'une quelconque des revendications 1 à 3, dans lequel,
l'introduction de bruit dans l'au moins un résultat de décomposition, et la synthèse de l'au moins un résultat de décomposition et du bruit pour obtenir au moins une image d'entraînement de synthèse inclut
sur la base de l'au moins une composante d'image de défaut, de l'au moins un facteur de correction et du bruit, l'acquisition d'au moins une composante d'image de défaut de bruit et d'au moins un facteur de correction de bruit, respectivement ; et
la synthèse de l'au moins une composante d'image de restauration, de l'au moins une composante d'image de défaut de bruit, et de l'au moins un facteur de correction de bruit pour obtenir l'au moins une image d'entraînement de synthèse.

5. Procédé d'apprentissage par réseau neuronal selon la revendication 4, dans lequel,
la synthèse de l'au moins une composante d'image de restauration, de l'au moins une composante d'image de défaut de bruit et de l'au moins un facteur de correction de bruit pour obtenir l'au moins une image d'entraînement de synthèse inclut
l'ajustement de l'au moins une image d'entraînement de synthèse sur la base d'au moins un parmi
un degré de lissage de bords de défauts calculé sur la base d'au moins l'au moins une composante d'image de défaut de bruit et l'au moins un facteur de correction de bruit ; et
une similarité de couleur calculée sur la base d'au moins l'au moins une composante d'image de restauration et l'au moins une composante d'image de défaut de bruit.

6. Procédé d'apprentissage par réseau neuronal selon l'une quelconque des revendications 1 à 5, dans lequel,
l'étape (S103) de réalisation d'une inspection de défaut sur l'au moins une image d'entraînement de synthèse par l'utilisation du réseau neuronal, et d'ajustement, sur la base d'au moins l'au moins une image d'entraînement originale et le résultat de l'inspection de défaut, d'au moins un paramètre du réseau neuronal inclut
l'acquisition, sur la base de l'au moins une image d'entraînement de synthèse, d'au moins une image d'entraînement de restauration, et l'ajustement, sur la base de l'au moins une image d'entraînement originale et de l'au moins une image d'entraînement de restauration, de l'au moins un paramètre du réseau neuronal.

7. Procédé de réalisation d'une inspection de défaut par l'utilisation d'un réseau neuronal, comprenant :
l'entrée (S201) d'au moins une image d'entrée dans le réseau neuronal, dans lequel, le réseau neuronal est obtenu au moyen du procédé d'apprentissage par réseau neuronal selon l'une quelconque des revendications 1 à 6 ; et
par l'utilisation (S202) du réseau neuronal, la réalisation d'une inspection de défaut sur l'au moins une image d'entrée, l'extraction d'un contour d'au moins un défaut, et l'obtention d'au moins un résultat d'inspection de défaut.

8. Appareil d'apprentissage par réseau neuronal (700) comprenant :
une partie d'entrée (710) configurée pour entrer au moins une image d'entraînement d'entrée dans un réseau neuronal, dans lequel, l'au moins une image d'entraînement d'entrée est générée par l'introduction d'au moins un défaut dans au moins une image d'entraînement originale, et l'au moins un défaut est associé à au moins une caractéristique d'image de l'au moins une image d'entraînement originale ;
une partie de synthèse (720) configurée pour utiliser le réseau neuronal pour décomposer l'au moins une image d'entraînement d'entrée, introduire du bruit dans l'au moins un résultat de décomposition et synthétiser l'au moins un résultat de décomposition et le bruit pour obtenir au moins une image d'entraînement de synthèse ; et
une partie d'inspection (730) configurée pour réaliser une inspection de défaut sur l'au moins une image d'entraînement de synthèse par l'utilisation du réseau neuronal, et ajuster, sur la base d'au moins l'au moins une image d'entraînement originale et le résultat d'inspection de défaut, au moins un paramètre du réseau neuronal, dans lequel la décomposition de l'au moins une image d'entraînement d'entrée inclut
l'utilisation du réseau neuronal pour décomposer l'au moins une image d'entraînement d'entrée pour acquérir au moins une composante d'image de restauration, au moins une composante d'image de défaut et au moins un facteur de correction.

9. Appareil d'apprentissage par réseau neuronal (700) selon la revendication 8, dans lequel,
l'au moins un défaut est associé à l'une quelconque d'une forme, d'une texture et d'une couleur de l'au moins une image d'entraînement originale.

10. Appareil d'apprentissage par réseau neuronal (700) selon la revendication 9, dans lequel,
l'au moins un paramètre du réseau neuronal est en outre ajusté sur la base de l'au moins une image d'entraînement originale et de l'au moins une composante d'image de restauration.

11. Appareil d'apprentissage par réseau neuronal (800) comprenant :
une mémoire (820) stockant des instructions exécutables par ordinateur ; et
un processeur (810) connecté à la mémoire,
dans lequel les instructions exécutables par ordinateur, lorsqu'elles sont exécutées, amènent le processeur à mener le procédé d'apprentissage par réseau neuronal selon l'une quelconque des revendications 1 à 6.

12. Support lisible par ordinateur non transitoire stockant des instructions exécutables par ordinateur pour l'exécution par un ordinateur, dans lequel les instructions exécutables par ordinateur, lorsqu'elles sont exécutées, amènent l'ordinateur à réaliser le procédé d'apprentissage par réseau neuronal selon l'une quelconque des revendications 1 à 6.

13. Appareil d'inspection de défaut (900) comprenant :
une partie d'entrée (910) configurée pour entrer au moins une image d'entrée dans un réseau neuronal, dans lequel le réseau neuronal est obtenu au moyen du procédé d'apprentissage par réseau neuronal selon l'une quelconque des revendications 1 à 6 ; et
une partie d'inspection (920) configurée pour, par l'utilisation du réseau neuronal, réaliser une inspection de défaut sur l'au moins une image entrée, extraire un contour d'au moins un défaut et obtenir au moins un résultat d'inspection de défaut.
